# EUROPEAN PATENT APPLICATION

(11) **EP 4 625 766 A1**
(43) Veröffentlichungstag der Anmeldung: **01.10.2025**
(21) Anmeldenummer: 23893667.8
(22) Anmeldetag: 13.11.2023
(51) Int. Cl.: H02K 1/20

(54) **MOTOR- UND FAHRZEUGANTRIEBSSYSTEM**

(30) Priorität: 23.11.2022 CN 202211477090
(71) Anmelder: Schaeffler Technologies AG & Co. KG, 91074 Herzogenaurach (DE)
(72) Erfinder: QIU, Huachao, Shanghai 201804 (CN)
(86) Internationale Anmeldenummer: PCT/CN2023/131224
(87) Internationale Veröffentlichungsnummer: WO 2024/109577

(57) **Zusammenfassung**

Ein Motor, umfassend: ein Gehäuse (1), das einen Grundkörperabschnitt (11) und Abdeckungen (12a, 12b) umfasst; einen Eisenkern (2), der an dem Gehäuse (1) befestigt und mit einer Vielzahl von Montagelöchern (2h1) versehen ist; eine Wicklung (3), die in den Montagelöchern (2h1) montiert ist und Erstreckungsteile (31, 32) umfasst; und Dichtungsringe (4a, 4b), die in dem Gehäuse (1) angeordnet sind, wobei die Dichtungsringe (4a, 4b) Endkanten von zwei axialen Seiten, die jeweils an dem Eisenkern (2) und den Abdeckungen (12a, 12b) anliegen, und den Außenumfang aufweisen, der an dem Grundkörperabschnitt (11) anliegt, wobei die Dichtungsringe (4a, 4b), der Grundkörperabschnitt (11) und der Eisenkern (2) einen Raum definieren, der mit den Montagelöchern (2h1) in Verbindung steht, wobei sich der Raum kontinuierlich entlang der Umfangsrichtung (C) über den gesamten Umfang erstreckt und die Erstreckungsteile (31, 32) in dem Raum untergebracht sind. Auf diese Weise kühlt ein Kühlfluid einen Stator vollständig und effektiv, wodurch negative Auswirkungen auf die Leistung eines Motors, die durch eine zu hohe Temperatur eines Stators in einem Arbeitsvorgang des Motors verursacht werden, reduziert werden. Außerdem ist ein Fahrzeugantriebssystem vorgesehen, das den Motor umfasst.

## Beschreibung

### Querverweis auf verwandte Anmeldungen

Die vorliegende Anmeldung beansprucht die Priorität der chinesischen Patentanmeldung, die am 23. November 2022 bei der China National Intellectual Property Administration unter der Anmeldenummer 202211477090.4 mit dem Titel "MOTOR AND VEHICLE POWER SYSTEM" eingereicht wurde und hierin durch Bezugnahme vollständig aufgenommen ist.

### Technisches Gebiet

Die vorliegende Anmeldung betrifft das Gebiet der Motoren und insbesondere einen Motor mit einer Kühlkonstruktion und ein Fahrzeugantriebssystem, das den Motor umfasst.

### Hintergrund

Heutzutage werden Motoren häufig als Leistungsquelle für die Abgabe eines Drehmoments verwendet und die Kühlung der Motoren ist sehr wichtig, damit die Motoren das angegebene Drehmoment abgeben können. In einer Motorkühlkonstruktion nach dem Stand der Technik ist die Motorkühlkonstruktion so ausgelegt, dass sie in engem Kontakt mit der Außenumfangsfläche eines Statoreisenkerns steht. Ein Kühlfluid (beispielsweise Kühlwasser), das in der Motorkühlkonstruktion strömt, kann dem Statoreisenkern Wärme entziehen und so die Kühlung bewirken. In einer anderen Motorkühlkonstruktion des Standes der Technik ist die Motorkühlkonstruktion so ausgelegt, dass sie eine Düse aufweist, um ein Kühlfluid (beispielsweise ein Kühlöl) direkt auf einen Stator zu sprühen, um Wärme abzuführen.

In einer der vorstehend beschriebenen Motorkühlkonstruktionen bewirkt das Kühlfluid jedoch eine indirekte Kühlung des Statoreisenkerns. Diese Kühlkonstruktion stellt manchmal eine unzureichende Kühlung für den Statoreisenkern bereit und ist noch weniger wünschenswert für die Kühlwirkung einer Statorwicklung, die nicht in Kontakt mit der Kühlkonstruktion des Motors steht. In der anderen vorstehend beschriebenen Motorkühlkonstruktion wird die Düse verwendet, um das Kühlfluid auf zwei Endabschnitte der Statorwicklung zu sprühen, die sich vom Statoreisenkern aus erstrecken, wodurch die beiden Endabschnitte der Statorwicklung direkt gekühlt werden. Obwohl diese Kühlkonstruktion den Kühleffekt im Vergleich zur vorherigen verbessern kann, ist die Kühlwirkung auf den Motorstator immer noch unzureichend.

### Kurzdarstellung

Die vorliegende Anmeldung wurde im Hinblick auf den vorstehend beschriebenen Stand der Technik erstellt. Eine Aufgabe der vorliegenden Anmeldung besteht darin, einen Motor bereitzustellen. Eine Kühlkonstruktion des Motors kann einen Stator vollständig und effektiv kühlen, wodurch nachteilige Auswirkungen auf die Leistung des Motors, die durch eine zu hohe Temperatur des Stators in einem Arbeitsvorgang des Motors verursacht werden, reduziert werden. Eine weitere Aufgabe der vorliegenden Anmeldung besteht darin, ein Fahrzeugantriebssystem bereitzustellen, das den Motor umfasst.

Um die vorstehend genannten Aufgaben zu lösen, werden die folgenden technischen Lösungen in der vorliegenden Anmeldung verwendet.

Die vorliegende Anwendung stellt einen Motor bereit, der umfasst:
ein Gehäuse, das einen Grundkörperabschnitt und Abdeckungen umfasst, wobei der Grundkörperabschnitt eine zylindrische Form aufweist und die Abdeckungen an dem Grundkörperabschnitt befestigt sind und eine axiale Öffnung des Grundkörperabschnitts verschließen;
einen Eisenkern, der in dem Gehäuse angeordnet ist und an dem Gehäuse befestigt ist, wobei der Eisenkern eine Vielzahl von Montagelöchern aufweist, die entlang einer Umfangsrichtung des Motors beabstandet verteilt sind;
eine Wicklung, die in den Montagelöchern montiert ist und Erstreckungsteile umfasst, die sich von dem Eisenkern entlang einer axialen Richtung des Motors erstrecken; und
Dichtungsringe, die in dem Gehäuse angeordnet sind, wobei die Dichtungsringe Endkanten von zwei axialen Seiten, die jeweils an dem Eisenkern und den Abdeckungen anliegen, und einen Außenumfang der Dichtungsringe aufweisen, der an dem Grundkörperabschnitt anliegt, sodass die Dichtungsringe, der Grundkörperabschnitt und der Eisenkern einen Raum definieren, der mit den Montagelöchern in Verbindung steht, wobei sich der Raum kontinuierlich entlang der Umfangsrichtung über den gesamten Umfang erstreckt und die Erstreckungsteile in dem Raum untergebracht sind.

Bei einer optionalen Lösung umfassen die Dichtungsringe einen ersten Dichtungsring und einen zweiten Dichtungsring.

Der erste Dichtungsring ist auf einer axialen Seite des Eisenkerns angeordnet und der erste Dichtungsring, der Grundkörperabschnitt und der Eisenkern definieren den auf der einen axialen Seite angeordneten Raum.

Der zweite Dichtungsring ist auf der anderen axialen Seite des Eisenkerns angeordnet und der zweite Dichtungsring, der Grundkörperabschnitt und der Eisenkern definieren den auf der anderen axialen Seite angeordneten Raum.

Der auf der einen axialen Seite angeordnete Raum steht mit dem auf der anderen axialen Seite angeordneten Raum über die Montagelöcher in Verbindung.

Bei einer anderen optionalen Lösung ist der Grundkörperabschnitt mit einem Einlass und einem Auslass gebildet. Der Einlass steht mit dem auf der einen axialen Seite angeordneten Raum in Verbindung und der Auslass steht mit dem auf der anderen axialen Seite angeordneten Raum in Verbindung.

In einer anderen optionalen Lösung, wenn die axiale Richtung parallel zu der horizontalen Ebene ist, ist der Einlass an einem untersten Teil des Grundkörperabschnitts entlang der vertikalen Richtung gebildet und der Auslass ist an einem obersten Teil des Grundkörperabschnitts entlang der vertikalen Richtung gebildet.

In einer anderen optionalen Lösung ist der Eisenkern ferner mit einer Vielzahl von Durchgängen gebildet, die Vielzahl von Durchgängen ist beabstandet von der Vielzahl von Montagelöchern angeordnet, die Vielzahl von Durchgängen ist beabstandet entlang der Umfangsrichtung verteilt und der auf der einen axialen Seite angeordnete Raum steht ferner mit dem auf der anderen axialen Seite angeordneten Raum über die Vielzahl von Durchgängen in Verbindung.

Bei einer anderen optionalen Lösung ist ein Umfangsabschnitt der Dichtungsringe mit einer Dichtungsnut gebildet und die Dichtungsnut ist zum Grundkörperabschnitt hin offen.

Der Motor umfasst ferner Dichtungen und die Dichtungen sind aus einem elastischen Material hergestellt und sind in der Dichtungsnut untergebracht, um eine Dichtung zwischen den Dichtungsringen und dem Grundkörperabschnitt zu erreichen.

In einer weiteren optionalen Lösung umfassen die Dichtungsringe einen axialen Abschnitt und einen radialen Abschnitt, die aneinander befestigt sind, wobei sich der axiale Abschnitt in axialer Richtung erstreckt, eine Endkante des axialen Abschnitts an dem Eisenkern anliegt, der radiale Abschnitt sich von der anderen Endkante des axialen Abschnitts zu einer radial äußeren Seite erstreckt und der radiale Abschnitt an den Abdeckungen anliegt.

In einer anderen optionalen Lösung umfasst der radiale Abschnitt eine Vielzahl von anliegenden Abschnitten, die entlang einer radialen Richtung des Motors beabstandet sind, und die Vielzahl von anliegenden Abschnitten steht in Richtung der Abdeckungen hervor, um an den Abdeckungen anzuliegen.

In einer anderen optionalen Lösung umfasst der radiale Abschnitt einen ersten dickwandigen Abschnitt, einen dünnwandigen Abschnitt und einen zweiten dickwandigen Abschnitt, wobei die Dicke des ersten dickwandigen Abschnitts größer ist als die Dicke des dünnwandigen Abschnitts, die Dicke des zweiten dickwandigen Abschnitts größer ist als die Dicke des dünnwandigen Abschnitts, der erste dickwandige Abschnitt und der zweite dickwandige Abschnitt an zwei Enden des dünnwandigen Abschnitts angeordnet sind und der erste dickwandige Abschnitt und der zweite dickwandige Abschnitt als die anliegenden Abschnitte dienen.

Die vorliegende Anmeldung stellt ein Fahrzeugantriebssystem bereit, das den Motor gemäß einer der vorhergehenden technischen Lösungen umfasst.

Durch Verwenden der vorstehenden technischen Lösungen stellt die vorliegende Anmeldung einen Motor und ein Fahrzeugantriebssystem bereit, das den Motor umfasst. Bei dem Motor der vorliegenden Anmeldung ist ein Stator in einem Gehäuse untergebracht, das aus einem Grundkörperabschnitt und Abdeckungen besteht, und der Stator umfasst einen Eisenkern und eine Wicklung, die zusammengefügt sind. Des Weiteren umfasst der Motor ferner Dichtungsringe, wobei die Dichtungsringe Endkanten von zwei axialen Seiten aufweisen, die jeweils an den Eisenkern und die Abdeckungen anliegen, wobei ein Außenumfang der Dichtungsringe an dem Grundkörperabschnitt anliegt und dadurch die Dichtungsringe durch den Eisenkern und die Abdeckungen entlang einer axialen Richtung des Motors und durch den Grundkörperabschnitt entlang einer radialen Richtung begrenzt sind. Auf diese Weise definieren die Dichtungsringe, der Grundkörperabschnitt und der Eisenkern einen Raum, der mit den Montagelöchern des Eisenkerns zur Montage der Wicklung in Verbindung steht, und der Raum erstreckt sich kontinuierlich entlang einer Umfangsrichtung des Motors über den gesamten Umfang. Dabei werden Erstreckungsteile der Wicklung, die sich von dem Eisenkern erstrecken, in dem Raum untergebracht.

Auf diese Weise erreichen die Dichtungsringe eine stabile konstruktive Koordination mit dem Grundkörperabschnitt und dem Eisenkern, wodurch der Raum zwischen den Dichtungsringen, dem Grundkörperabschnitt und dem Eisenkern definiert wird, um die Erstreckungsteile der Wicklung aufzunehmen. Nachdem der Raum mit einem Kühlfluid (z. B. einem Kühlöl) gefüllt ist, können nicht nur die Erstreckungsteile der Wicklung in das Kühlfluid eingetaucht werden, sondern das Kühlfluid kann auch aus dem Raum durch einen Abschnitt der Wicklung strömen, der in den Montagelöchern angeordnet ist. Auf diese Weise kann das Kühlfluid sowohl die gesamte Wicklung als auch den Eisenkern direkt kühlen. Somit kann die Kühlkonstruktion des Motors der vorliegenden Anmeldung den Stator vollständig und effektiv kühlen, wodurch negative Auswirkungen auf die Leistung des Motors, die durch eine zu hohe Temperatur des Stators in einem Arbeitsvorgang des Motors verursacht werden, reduziert werden.

### Kurzbeschreibung der Zeichnungen

FIG. 1 ist eine schematische Querschnittsansicht, die eine Konstruktion eines Motors gemäß einer Ausführungsform der vorliegenden Anmeldung zeigt.
FIG. 2 ist eine schematische Querschnittsansicht, die einen Teil der Konstruktion des Motors in FIG. 1 zeigt.
FIG. 3 ist ein teilweises schematisches Konstruktionsdiagramm, das den Zusammenbau eines Eisenkerns und einer Wicklung des Motors in FIG. 1 zeigt.
FIG. 4 ist ein schematisches Diagramm, das eine Konstruktion eines Eisenkerns des Motors in FIG. 1 zeigt.
FIG. 5 ist ein schematisches Diagramm, das einen Teil der Konstruktion des Eisenkerns in FIG. 4 zeigt.
FIG. 6 ist eine schematische Querschnittsansicht, die einen Teil der Konstruktion eines ersten Dichtungsrings des Motors in FIG. 1 zeigt, wobei die gestrichelte Linie die Grenzposition zwischen einem axialen Abschnitt und einem radialen Abschnitt darstellt.

### Ausführliche Beschreibung

Nachstehend werden in Bezug auf die beigefügten Zeichnungen beispielhafte Ausführungsformen der vorliegenden Anmeldung beschrieben. Es versteht sich, dass diese konkreten Beschreibungen Fachleute nur lehren sollen, wie die vorliegende Anmeldung zu realisieren ist, und weder alle möglichen Implementierungen der vorliegenden Anmeldung erschöpfend darlegen noch den Schutzumfang der vorliegenden Anmeldung einschränken sollen.

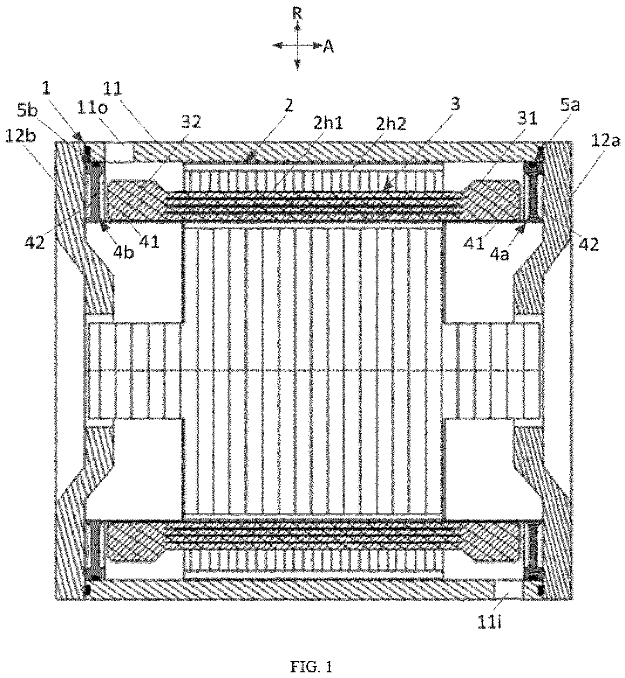

In der vorliegenden Anmeldung bezeichnen die Begriffe "axiale Richtung", "radiale Richtung" und "Umfangsrichtung" eine axiale Richtung, radiale Richtung bzw. Umfangsrichtung eines Motors. "Eine axiale Seite" bezieht sich auf die rechte Seite in FIG. 1 und "die andere axiale Seite" bezieht sich auf die linke Seite in FIG. 1 zeigt. "Eine radial äußere Seite" bezieht sich auf eine Seite, die entlang einer radialen Richtung von der Mittelachse des Motors entfernt ist, und "eine radial innere Seite" bedeutet eine Seite, die entlang einer radialen Richtung nahe der Mittelachse des Motors liegt.

Der Motor gemäß der vorliegenden Anmeldung umfasst ein Gehäuse, einen Stator und einen Rotor. Der Stator und der Rotor sind koaxial angeordnet und befinden sich im Wesentlichen in einem von dem Gehäuse umschlossenen Raum. Der Stator ist an dem Gehäuse befestigt. Der Rotor ist an einer radial inneren Seite des Stators angeordnet und ist relativ zum Stator drehbar. Zwischen dem Rotor und dem Stator befindet sich ein Luftspalt und der Rotor kann über eine Rotorwelle mit einem Übertragungsmechanismus verbunden werden. Der Motor ist mit einer Kühlkonstruktion zur Kühlung des Stators versehen. In der Kühlkonstruktion werden ein Eisenkern und eine Wicklung des Stators gekühlt, indem beispielsweise Kühlöl als Kühlfluid verwendet wird. Daher kann der Motor gemäß der vorliegenden Anmeldung ein ölgekühlter Motor sein.

Eine spezifische Konstruktion eines Motors gemäß einer Ausführungsform der vorliegenden Anmeldung wird im nachstehend unter Bezugnahme auf die beigefügten Zeichnungen der Beschreibung näher beschrieben, wobei insbesondere eine Kühlkonstruktion dargestellt wird, die zur Kühlung eines Stators konfiguriert ist.

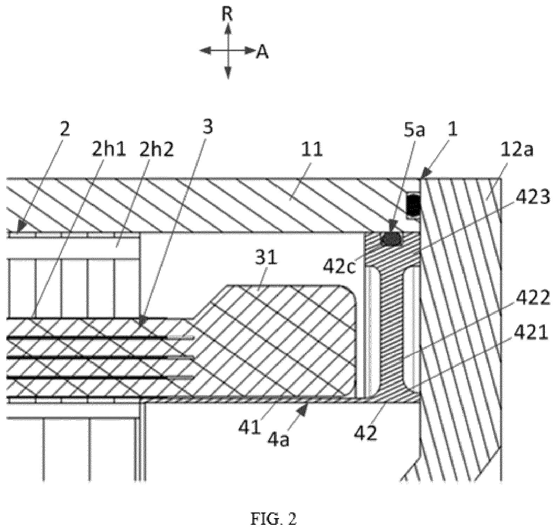

Wie in FIG. 1 und FIG. 2 gezeigt, umfasst ein Motor gemäß einer Ausführungsform der vorliegenden Anmeldung ein Gehäuse 1, einen Eisenkern 2, eine Wicklung 3, zwei Dichtungsringe (einen ersten Dichtungsring 4a und einen zweiten Dichtungsring 4b) und zwei Dichtungen (eine erste Dichtung 5a und eine zweite Dichtung 5b), die zusammengebaut sind, wobei der Eisenkern 2 und die Wicklung 3 einen Stator bilden.

**In** dieser Ausführungsform umfasst, wie in FIG. 1 und FIG. 2 gezeigt, das Gehäuse 1 einen Grundkörperabschnitt 11, eine erste Abdeckung 12a und eine zweite Abdeckung 12b, die zusammengefügt sind. Der Grundkörperabschnitt 11 weist insbesondere eine zylindrische Form auf. Der Grundkörperabschnitt 11 ist mit einem Durchgangsloch versehen, das entlang einer axialen Richtung A durchlaufen werden kann, und das Durchgangsloch weist eine Öffnung auf, die zu zwei axialen Seiten hin offen ist. Die erste Abdeckung 12a kann durch eine mechanische Verbindung, z. B. eine Schraubverbindung, lösbar am Grundkörperabschnitt 11 befestigt werden. Die erste Abdeckung 12a verschließt eine Öffnung auf einer axialen Seite des Grundkörperabschnitts 11 und zwischen der ersten Abdeckung 12a und dem Grundkörperabschnitt 11 ist eine Dichtung zum Abdichten vorgesehen. Die zweite Abdeckung 12b kann durch eine mechanische Verbindung, z. B. eine Schraubverbindung, lösbar am Grundkörperabschnitt 11 befestigt werden. Die zweite Abdeckung 12b verschließt eine Öffnung auf der anderen axialen Seite des Grundkörperabschnitts 11 und zwischen der zweiten Abdeckung 12b und dem Grundkörperabschnitt 11 ist eine Dichtung zum Abdichten vorgesehen. Auf diese Weise bilden der Grundkörperabschnitt 11, die erste Abdeckung 12a und die zweite Abdeckung 12b einen Aufnahmeraum im Inneren des Gehäuses 1 und andere Komponenten sind im Wesentlichen innerhalb des Aufnahmeraums untergebracht.

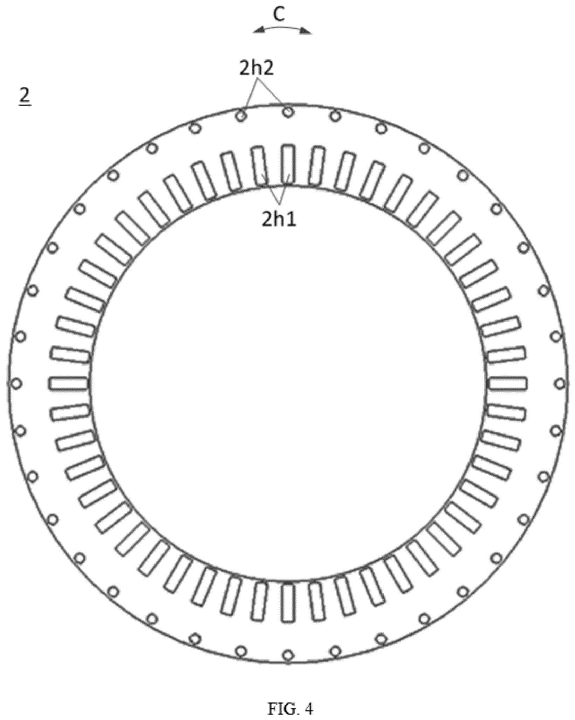

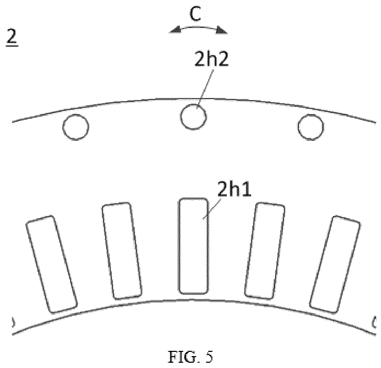

In dieser Ausführungsform umfasst, wie in FIG. 1 bis FIG. 2 gezeigt, der Eisenkern 2 im Gehäuse 1 angeordnet und ist am Gehäuse 1 befestigt. Der Eisenkern 2 kann durch Zusammenlaminieren einer Vielzahl von Siliziumstahlblechen entlang der axialen Richtung A gebildet werden. Jedes der Siliziumstahlbleche kann eine Dicke von beispielsweise 0,25 mm bis 0,5 mm aufweisen und kann durch Stanzen gebildet werden. Wie in FIG. 1 bis FIG. 5 gezeigt, weist der Eisenkern 2 insgesamt eine zylindrische Konstruktion auf und der Eisenkern 2 kann am Grundkörperabschnitt 11 des Gehäuses 1 durch Presspassung befestigt werden. Auf diese Weise steht eine Außenumfangsfläche des Eisenkerns 2 in engem Kontakt mit einer Innenumfangsfläche des Grundkörperabschnitts 11.

Wie ferner in FIG. 1 bis FIG. 5 gezeigt, ist der Eisenkern 2 mit einer Vielzahl von Montagelöchern 2h1 und einer Vielzahl von Durchgängen 2h2 versehen und die Vielzahl von Montagelöchern 2h1 wird zum Einsetzen und Montieren der Wicklung 3 verwendet. Die Vielzahl von Durchgängen 2h2 wird hauptsächlich dazu verwendet, Räume zu verbinden, die auf zwei axialen Seiten des Eisenkerns 2 angeordnet sind, sodass das Kühlfluid zwischen den Räumen der zwei axialen Seiten des Eisenkerns 2 hauptsächlich über die Vielzahl von Durchgängen 2h strömen kann. Die Vielzahl von Montagelöchern 2h1 ist an demselben Teil des Eisenkerns 2 entlang einer radialen Richtung R angeordnet und die Vielzahl von Montagelöchern 2h1 ist gleichmäßig verteilt, sodass sie entlang einer Umfangsrichtung C beabstandet sind. Jedes Montageloch 2h1 erstreckt sich linear entlang der axialen Richtung A und ist nur an den Endflächen der beiden axialen Seiten des Eisenkerns 2 offen und jedes Montageloch 2h1 ist sowohl entlang der radialen Richtung R als auch der Umfangsrichtung C geschlossen. Die Vielzahl von Durchgängen 2h2 ist von der Vielzahl von Montagelöchern 2h1 getrennt. Die Vielzahl von Durchgängen 2h2 kann an demselben Teil des Eisenkerns 2 entlang der radialen Richtung R angeordnet sein und an den radial äußeren Seiten der Vielzahl von Montagelöchern 2h1 angeordnet sein. Die Vielzahl von Durchgängen 2h2 ist gleichmäßig verteilt, sodass sie entlang der Umfangsrichtung C voneinander beabstandet sind. Jeder Durchgang 2h2 erstreckt sich linear entlang der axialen Richtung A und ist nur an den Endflächen der beiden axialen Seiten des Eisenkerns 2 offen und jeder Durchgang 2h2 ist sowohl entlang der radialen Richtung R als auch der Umfangsrichtung C geschlossen. Es versteht sich, dass die Anordnung der vorstehenden Durchgänge 2h2 nur beispielhaft und nicht einschränkend ist. Beispielsweise kann die Vielzahl von Durchgängen alternativ an verschiedenen Teilen entlang der radialen Richtung R des Eisenkerns 2 vorgesehen sein.

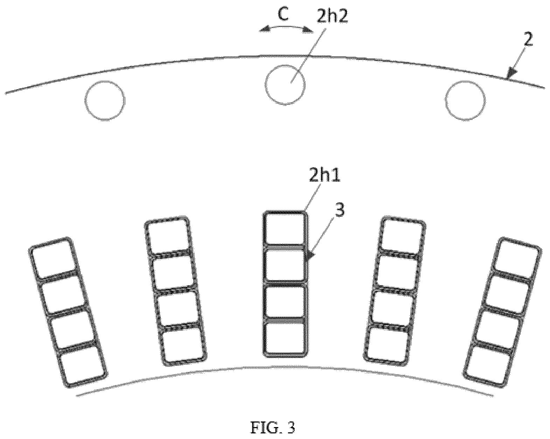

In dieser Ausführungsform kann die Wicklung 3 durch Verbinden mehrerer Haarnadelwicklungen gebildet werden. Wie in FIG. 1 bis FIG. 3 gezeigt, wird ein Mittelabschnitt der Wicklung 3 in die Montagelöcher 2h1 des Eisenkerns 2 eingesetzt und montiert, wobei der Mittelabschnitt der Wicklung 3 in jedem Montageloch 2h1 in vier Schichten unterteilt ist (unter Bezugnahme auf FIG. 3) und jede Schicht einen Drahtleiter mit rechteckigem Querschnitt umfassen kann. In jedem Montageloch 2h1 befinden sich Spalten zwischen angrenzenden Drahtleitern und zwischen dem Drahtleiter und dem Eisenkern 2 und diese Spalten ermöglichen es, dass die Montagelöcher 2h1 entlang der axialen Richtung A für das Kühlfluid durchlaufen werden. Ein Endabschnitt der Wicklung 3, der auf zwei axialen Seiten des Mittelabschnitts der Wicklung angeordnet ist, erstreckt sich vom Eisenkern 2 entlang der axialen Richtung A. Auf diese Weise umfasst die Wicklung 3 einen ersten Erstreckungsteil 31, der auf einer axialen Seite angeordnet ist, und einen zweiten Erstreckungsteil 32, der auf der anderen axialen Seite angeordnet ist.

In dieser Ausführungsform können der erste Dichtungsring 4a und der zweite Dichtungsring 4b aus einem isolierenden Material hergestellt werden. Wie in FIG. 1 und FIG. 2 gezeigt, sind sowohl der erste Dichtungsring 4a als auch der zweite Dichtungsring 4b im Gehäuse 1 angeordnet und am Gehäuse 1 befestigt. Endkanten von zwei axialen Seiten des ersten Dichtungsrings 4a liegen jeweils an einer Endfläche auf einer axialen Seite des Eisenkerns 2 und der ersten Abdeckung 12a an und ein Außenumfang des ersten Dichtungsrings 4a liegt an der Innenumfangsfläche des Grundkörperabschnitts 11 an, sodass der erste Dichtungsring 4a, der Grundkörperabschnitt 11 und der Eisenkern 2 einen ersten Raum definieren, der mit den Montagelöchern 2h1 in Verbindung steht. Der erste Raum erstreckt sich kontinuierlich entlang der Umfangsrichtung C über den gesamten Umfang, und der erste Erstreckungsteil 31 der Wicklung 3 ist in dem ersten Raum untergebracht. Endkanten von zwei axialen Seiten des zweiten Dichtungsrings 4b liegen jeweils an einer Endfläche auf der anderen axialen Seite des Eisenkerns 2 und der zweiten Abdeckung 12b an und ein Außenumfang des zweiten Dichtungsrings 4b liegt an der Innenumfangsfläche des Grundkörperabschnitts 11 an, sodass der zweite Dichtungsring 4b, der Grundkörperabschnitt 11 und der Eisenkern 2 einen zweiten Raum definieren, der mit den Montagelöchern 2h1 in Verbindung steht. Der zweite Raum erstreckt sich kontinuierlich entlang der Umfangsrichtung C über den gesamten Umfang und der zweite Erstreckungsteil 32 der Wicklung 3 ist in dem zweiten Raum untergebracht. Auf diese Weise können der erste Raum und der zweite Raum, die auf den zwei axialen Seiten des Eisenkerns 2 angeordnet sind, über die Vielzahl von Montagelöchern 2h1 und die Vielzahl von Durchgängen 2h2 miteinander in Verbindung stehen, sodass das Kühlfluid in dem ersten Raum, dem zweiten Raum, der Vielzahl von Montagelöchern 2h1 und der Vielzahl von Durchgängen 2h2 strömen kann.

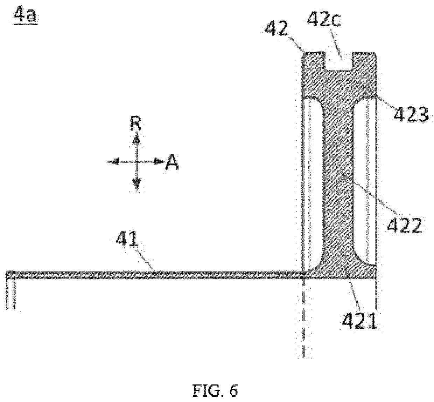

Ferner können der erste Dichtungsring 4a und der zweite Dichtungsring 4b die gleiche Konstruktion aufweisen. Der erste Dichtungsring 4a wird als Beispiel zur Veranschaulichung einer Konstruktion des Dichtungsrings verwendet. Der erste Dichtungsring 4a ist einteilig und ringförmig gebildet. Wie in FIG. 1, FIG. 2 und FIG. 6 gezeigt, umfasst der erste Dichtungsring 4a einen axialen Abschnitt 41 und einen radialen Abschnitt 42, die als ein Ganzes gebildet sind. Der axiale Abschnitt 41 erstreckt sich entlang der axialen Richtung A und eine Endkante der anderen axialen Seite des axialen Abschnitts 41 liegt an der Endfläche auf der einen axialen Seite des Eisenkerns 2 an. Der radiale Abschnitt 42 erstreckt sich von einer Endkante einer axialen Seite des axialen Abschnitts 41 in Richtung einer radial äußeren Seite entlang der radialen Richtung R. Ferner, wie in FIG. 2 und FIG. 6 gezeigt, umfasst der radiale Abschnitt 42 einen ersten dickwandigen Abschnitt 421, einen dünnwandigen Abschnitt 422 und einen zweiten dickwandigen Abschnitt 423 entlang der radialen Richtung R. Die Dicke des ersten dickwandigen Abschnitts 421 (eine Abmessung entlang der axialen Richtung A) ist größer als die Dicke des dünnwandigen Abschnitts 422, die Dicke des zweiten dickwandigen Abschnitts 423 ist größer als die Dicke des dünnwandigen Abschnitts 422 und die Dicke des ersten dickwandigen Abschnitts 421 kann gleich der Dicke des zweiten dickwandigen Abschnitts 423 sein. Der erste dickwandige Abschnitt 421 ist an einem Ende auf einer radial inneren Seite des dünnwandigen Abschnitts 422 angeordnet und der zweite dickwandige Abschnitt 423 ist an einem Ende auf einer radial äußeren Seite des dünnwandigen Abschnitts 422 angeordnet. Der erste dickwandige Abschnitt 421 und der zweite dickwandige Abschnitt 423 dienen als anliegender Abschnitt für den radialen Abschnitt 42, um an der ersten Abdeckung 12a entlang der axialen Richtung A anzuliegen, sodass eine Endfläche auf einer axialen Seite des ersten dickwandigen Abschnitts 421 und eine Endfläche auf einer axialen Seite des zweiten dickwandigen Abschnitts 423 an der ersten Abdeckung 12a anliegt. Ein Umfangsabschnitt des radialen Abschnitts 42 ist mit einer Dichtungsnut 42c versehen und die Dichtungsnut 42c ist in Richtung des Grundkörperabschnitts 11 des Gehäuses 1 offen. Die erste Dichtung 5a ist aus einem elastischen Material wie Gummi hergestellt und ist in der Dichtungsnut 42c untergebracht, um eine Abdichtung zwischen dem ersten Dichtungsring 4a und dem Grundkörperabschnitt 11 zu erreichen. Der zweite Dichtungsring 4b weist eine zum ersten Dichtungsring 4a symmetrische Konstruktion auf. Die zweite Dichtung 5b ist aus einem elastischen Material wie Gummi hergestellt und ist in der Dichtungsnut 42c des zweiten Dichtungsrings 4b untergebracht, um eine Abdichtung zwischen dem zweiten Dichtungsring 4b und dem Grundkörperabschnitt 11 zu erreichen. Des Weiteren können sowohl der erste Dichtungsring 4a als auch der zweite Dichtungsring 4b durch eine Presspassung zwischen dem radialen Abschnitt 42 und dem Grundkörperabschnitt 11 des Gehäuses 1 fest am Gehäuse 1 befestigt werden.

Auf diese Weise begrenzen entlang der axialen Richtung A die erste Abdeckung 12a und der Grundkörperabschnitt 11 den ersten Dichtungsring 4a, die zweite Abdeckung 12b und der Grundkörperabschnitt 11 begrenzen den zweiten Dichtungsring 4b und der Grundkörperabschnitt 11 begrenzt den ersten Dichtungsring 4a und den zweiten Dichtungsring 4b entlang der radialen Richtung R, sodass der erste Dichtungsring 4a und der zweite Dichtungsring 4b zuverlässig und stabil an ihrem Platz montiert werden können. Da ferner sowohl der erste Dichtungsring 4a als auch der zweite Dichtungsring 4b mit dünnwandigen Abschnitten 422 versehen sind, kann die Qualität des Dichtungsrings 4a und des Dichtungsrings 4b reduziert werden, während der dickwandige Abschnitt 421 und der dickwandige Abschnitt 423, die entlang der radialen Richtung R beabstandet sind, als anliegende Abschnitte dienen, sodass die Zuverlässigkeit und Stabilität der Befestigung des ersten Dichtungsrings 4a und des zweiten Dichtungsrings 4b verbessert werden können.

Darüber hinaus ist, wie in FIG. 1 gezeigt, der Grundkörperabschnitt 11 des Gehäuses 1 mit einem Einlass 11i und einem Auslass 11o gebildet. Der Einlass 11i steht mit einem auf der einen axialen Seite angeordneten Raum in Verbindung und der Auslass 11o steht mit einem auf der anderen axialen Seite angeordneten Raum in Verbindung. Wenn die axiale Richtung A parallel zu der horizontalen Ebene ist, kann der Einlass 11i an einem untersten Teil des Grundkörperabschnitts 11 entlang der vertikalen Richtung gebildet sein und der Auslass 11o ist an einem obersten Teil des Grundkörperabschnitts 11 entlang der vertikalen Richtung gebildet. Auf diese Weise ist es vorteilhaft, dass das Kühlfluid, das über den Einlass 11i in den ersten Raum eintritt, den ersten Raum, den zweiten Raum sowie die Vielzahl von Montagelöchern 2h1 und die Vielzahl von Durchgängen 2h2, die die beiden Räume verbinden, füllt. Somit bildet der Motor gemäß einer Ausführungsform der vorliegenden Anmeldung einen Kühlströmungspfad unter Verwendung des Einlasses 11i, des ersten Raums, der Vielzahl von Montagelöchern 2h1, der Vielzahl von Durchgängen 2h2, des zweiten Raums und des Auslasses 11o, wobei das Kühlfluid durch den Kühlströmungspfad strömt, um den Stator zu kühlen.

Da ferner der erste Erstreckungsteil 31 der Wicklung 3 immer im ersten Raum angeordnet ist, kann der erste Erstreckungsteil 31 der Wicklung 3 in das Kühlfluid im ersten Raum eingetaucht werden und das Kühlfluid kann den ersten Erstreckungsteil 31 der Wicklung 3 direkt kühlen. Da der zweite Erstreckungsteil 32 der Wicklung 3 immer in dem zweiten Raum angeordnet ist, kann der zweite Erstreckungsteil 32 der Wicklung 3 in das Kühlfluid im zweiten Raum eingetaucht werden und das Kühlfluid kann den zweiten Erstreckungsteil 32 der Wicklung 3 direkt kühlen. Außerdem strömt das Kühlfluid ferner durch die Vielzahl von Montagelöchern 2h1, sodass das Kühlfluid den Mittelabschnitt der Wicklung 3 direkt kühlen kann. Des Weiteren strömt das Kühlfluid nicht nur durch die Vielzahl von Montagelöchern 2h1, sondern auch durch die Vielzahl von Durchgängen 2h2, sodass das Kühlfluid den Eisenkern 2 direkt kühlen kann. Auf diese Weise kann die Kühlkonstruktion des Motors den Stator des Motors vollständig und effektiv kühlen, wodurch nachteilige Auswirkungen auf die Leistung des Motors, die durch eine zu hohe Temperatur des Stators in einem Arbeitsvorgang des Motors verursacht werden, reduziert werden.

Es versteht sich, dass die vorstehenden Ausführungsformen nur beispielhaft sind und die vorliegende Anmeldung nicht einschränken sollen. Fachleute können verschiedene Modifikationen und Änderungen an den vorstehenden Ausführungsformen gemäß der Lehre der vorliegenden Anmeldung vornehmen, ohne vom Schutzumfang der vorliegenden Anmeldung abzuweichen. Im Folgenden werden die technischen Lösungen der vorliegenden Anmeldung ergänzend beschrieben.
i. In der vorliegenden Anmeldung wird ferner ein Fahrzeugantriebssystem bereitgestellt, wobei das Fahrzeugantriebssystem ein elektrisches Brückenantriebssystem oder ein Hybridsystem sein kann. Das Fahrzeugantriebssystem gemäß der vorliegenden Anmeldung kann neben dem Motor der vorliegenden Anmeldung auch Übertragungsmechanismen wie ein Getriebe umfassen. Der Motor ist antriebsmäßig mit einer Eingangswelle des Getriebes verbunden, um eine bidirektionale Drehmomentübertragung zu erreichen.
ii. Bei der technischen Lösung des Motors der vorliegenden Anmeldung kann ein Ölversorgungssystem, das mit dem Einlass 11i in Verbindung steht, außerhalb des Gehäuses 1 des Motors vorgesehen werden. Das Ölversorgungssystem kann eine Pumpe, einen Ölkanal (Ölleitung) und dergleichen umfassen, sodass ein Kühlöl, das als Kühlfluid dient, durch das Ölversorgungssystem zugeführt werden kann. Darüber hinaus kann der Auslass 11o auch mit dem Getriebe verbunden sein, sodass das Kühlfluid nach der Kühlung des Stators in ein Gehäuse des Getriebes zurückgeführt werden kann.
iii. Es versteht sich, dass bei einer optionalen technischen Lösung der vorliegenden Anmeldung ein Raum zum Eintauchen des Erstreckungsteils der Wicklung 3 in das Kühlfluid nur auf einer axialen Seite des Eisenkerns 2 gebildet werden kann, wobei der Einlass 11i im obersten Abschnitt des Raums vorgesehen ist, wodurch ebenfalls eine effektive Kühlung des Stators erreicht werden kann.
iv. Es versteht sich, dass bei einer optionalen technischen Lösung der vorliegenden Anmeldung die radialen Abschnitte 42 des Dichtungsrings 4a und des Dichtungsrings 4b der vorliegenden Anmeldung mehr als zwei anliegende Abschnitte umfassen können und diese anliegenden Abschnitte können entlang der radialen Richtung R des Motors voneinander beabstandet sein. Diese anliegenden Abschnitt stehen in Richtung der Abdeckung 12a und der Abdeckung 12b hervor, um an der Abdeckung 12a und der Abdeckung 12b des Gehäuses 1 des Motors anzuliegen. Darüber hinaus sind der Dichtungsring 4a und der Dichtungsring 4b der vorliegenden Anmeldung einfach aufgebaut und können ohne Weiteres montiert werden.

### LISTE DER BEZUGSZEICHEN

- 1: Gehäuse;
- 11: Grundkörperabschnitt;
- 11i: Einlass;
- 11o: Auslass;
- 12a: Erste Abdeckung;
- 12b: Zweite Abdeckung;
- 2: Eisenkern;
- 2h1: Montagelöcher;
- 2h2: Durchgänge;
- 3: Wicklung;
- 31: Erster Erstreckungsteil;
- 32: Zweiter Erstreckungsteil;
- 4a: Erster Dichtungsring;
- 4b: Zweiter Dichtungsring;
- 41: Axialer Abschnitt;
- 42: Radialer Abschnitt;
- 42c: Dichtungsnut;
- 421: Erster dickwandiger Abschnitt;
- 422: Dünnwandiger Abschnitt;
- 423: Zweiter dickwandiger Abschnitt;
- 5a: Erste Dichtung;
- 5b: Zweite Dichtung;
- A: Axiale Richtung;
- R: Radiale Richtung;
- C: Umfangsrichtung

## Patentansprüche

1. Motor, umfassend:
ein Gehäuse (1), das einen Grundkörperabschnitt (11) und Abdeckungen (12a, 12b) umfasst, wobei der Grundkörperabschnitt (11) eine zylindrische Form aufweist und die Abdeckungen (12a, 12b) an dem Grundkörperabschnitt (11) befestigt sind und eine axiale Öffnung des Grundkörperabschnitts (11) verschließen;
einen Eisenkern (2), der in dem Gehäuse (1) angeordnet und an dem Gehäuse (1) befestigt ist, wobei der Eisenkern (2) eine Vielzahl von Montagelöchern (2h1) aufweist, die entlang einer Umfangsrichtung (C) des Motors beabstandet sind;
eine Wicklung (3), die in den Montagelöchern (2h1) montiert ist und Erstreckungsteile (31, 32) umfasst, die sich von dem Eisenkern (2) entlang einer axialen Richtung (A) des Motors erstrecken; und
Dichtungsringe (4a, 4b), die in dem Gehäuse (1) angeordnet sind, wobei die Dichtungsringe (4a, 4b) Endkanten von zwei axialen Seiten, die jeweils an dem Eisenkern (2) und den Abdeckungen (12a, 12b) anliegen, und einen Außenumfang der Dichtungsringe (4a, 4b) aufweisen, der an dem Grundkörperabschnitt (11) anliegt, sodass die Dichtungsringe (4a, 4b), der Grundkörperabschnitt (11) und der Eisenkern (2) einen Raum definieren, der mit den Montagelöchern (2h1) in Verbindung steht, wobei sich der Raum kontinuierlich entlang der Umfangsrichtung (C) über den gesamten Umfang erstreckt und die Erstreckungsteile (31, 32) in dem Raum untergebracht sind.

2. Motor nach Anspruch 1, wobei die Dichtungsringe (4a, 4b) einen ersten Dichtungsring (4a) und einen zweiten Dichtungsring (4b) umfassen;
der erste Dichtungsring (4a) auf einer axialen Seite des Eisenkerns (2) angeordnet ist und der erste Dichtungsring (4a), der Grundkörperabschnitt (11) und der Eisenkern (2) den auf der einen axialen Seite angeordneten Raum definieren;
der zweite Dichtungsring (4b) auf der anderen axialen Seite des Eisenkerns (2) angeordnet ist und der zweite Dichtungsring (4b), der Grundkörperabschnitt (11) und der Eisenkern (2) den auf der anderen axialen Seite angeordneten Raum definieren; und
der auf der einen axialen Seite angeordnete Raum mit dem auf der anderen axialen Seite angeordneten Raum über die Montagelöcher (2h1) in Verbindung steht.

3. Motor nach Anspruch 2, wobei der Grundkörperabschnitt (11) mit einem Einlass (11i) und einem Auslass (11o) gebildet ist, der Einlass (11i) mit dem auf der einen axialen Seite angeordneten Raum in Verbindung steht und der Auslass (11o) mit dem auf der anderen axialen Seite angeordneten Raum in Verbindung steht.

4. Motor nach Anspruch 3, wobei, wenn die axiale Richtung (A) parallel zu der horizontalen Ebene ist, der Einlass (11i) an einem untersten Teil des Grundkörperabschnitts (11) entlang der vertikalen Richtung gebildet ist und der Auslass (11o) an einem obersten Teil des Grundkörperabschnitts (11) entlang der vertikalen Richtung gebildet ist.

5. Motor nach Anspruch 2 oder 3, wobei der Eisenkern (2) ferner mit einer Vielzahl von Durchgängen (2h2) gebildet ist, die Vielzahl von Durchgängen (2h2) beabstandet von der Vielzahl von Montagelöchern (2h1) angeordnet ist, die Vielzahl von Durchgängen (2h2) beabstandet entlang der Umfangsrichtung (C) verteilt sind und der auf der einen axialen Seite angeordnete Raum ferner mit dem auf der anderen axialen Seite angeordneten Raum über die Vielzahl von Durchgängen (2h2) in Verbindung steht.

6. Motor nach einem der Ansprüche 1 bis 4, wobei ein Umfangsabschnitt der Dichtungsringe (4a, 4b) mit einer Dichtungsnut (42c) gebildet ist und die Dichtungsnut (42c) zum Grundkörperabschnitt (11) hin offen ist; und
der Motor ferner Dichtungen (5a, 5b) umfasst und die Dichtungen (5a, 5b) aus einem elastischen Material hergestellt sind und in der Dichtungsnut (42c) untergebracht sind, um eine Dichtung zwischen den Dichtungsringen (4a, 4b) und dem Grundkörperabschnitt (11) zu erreichen.

7. Motor nach einem der Ansprüche 1 bis 4, wobei die Dichtungsringe (4a, 4b) einen axialen Abschnitt (41) und einen radialen Abschnitt (42) umfassen, die aneinander befestigt sind, der axiale Abschnitt (41) sich entlang der axialen Richtung (A) erstreckt, eine Endkante des axialen Abschnitts (41) an dem Eisenkern (2) anliegt, der radiale Abschnitt (42) sich von der anderen Endkante des axialen Abschnitts (41) zu einer radial äußeren Seite erstreckt und der radiale Abschnitt (42) an den Abdeckungen (12a, 12b) anliegt.

8. Motor nach Anspruch 7, wobei der radiale Abschnitt (42) eine Vielzahl von anliegenden Abschnitten umfasst, die entlang einer radialen Richtung (R) des Motors beabstandet sind, und die Vielzahl von anliegenden Abschnitten in Richtung der Abdeckungen (12a, 12b) hervorstehen, um an den Abdeckungen (12a, 12b) anzuliegen.

9. Motor nach Anspruch 8, wobei der radiale Abschnitt (42) einen ersten dickwandigen Abschnitt (421), einen dünnwandigen Abschnitt (422) und einen zweiten dickwandigen Abschnitt (423) umfasst, wobei die Dicke des ersten dickwandigen Abschnitts (421) größer ist als die Dicke des dünnwandigen Abschnitts (422), die Dicke des zweiten dickwandigen Abschnitts (423) größer ist als die Dicke des dünnwandigen Abschnitts (422), der erste dickwandige Abschnitt (421) und der zweite dickwandige Abschnitt (423) an zwei Enden des dünnwandigen Abschnitts (422) angeordnet sind und der erste dickwandige Abschnitt (421) und der zweite dickwandige Abschnitt (423) als die anliegenden Abschnitte dienen.

10. Fahrzeugantriebssystem, das den Motor nach einem der Ansprüche 1 bis 9 umfasst.
